# EUROPÄISCHE PATENTSCHRIFT

(11) **EP 0 607 953 B1**
(45) Veröffentlichungstag und Bekanntmachung des Hinweises auf die Patenterteilung: **23.07.1997**
(21) Anmeldenummer: 94100755.1
(22) Anmeldetag: 20.01.1994
(51) Int. Cl.: F25B 41/06

(54) **Expansionsventil für Kältemittel**
Refrigerant expansion valve
Soupape de détente pour réfrigérant

(30) Priorität: 21.01.1993 DE 4301498
(43) Veröffentlichungstag der Anmeldung: 27.07.1994
(73) Patentinhaber: Ernst Flitsch GmbH & Co., D-70734 Fellbach (DE)
(72) Erfinder: Kober, Helmut, D-70734 Fellbach (DE); Osthues, Josef, Dr., D-73614 Schorndorf (DE); Reissner, Joachim, D-71229 Leonberg (DE)
(74) Vertreter: Wolf, Eckhard, Dr.-Ing.

(56) Entgegenhaltungen:
- EP-A- 0 361 539
- US-A- 2 734 495
- US-A- 3 087 479
- US-A- 4 556 193

## Beschreibung

Die Erfindung betrifft ein Expansionsventil für Kältemittel in Kälteanlagen oder Wärmepumpen mit den im Oberbegriff des Anspruchs 1 angegebenen Merkmalen.

Bei einem bekannten Expansionsventil (US-A-4 556 193) ist der als Ventilnadel ausgebildete Ventilkörper bezüglich des Ventilsitzes axial beweglich, jedoch starr mit einem Schrittmotor bzw. einer motorisch angetriebenen Stellvorrichtung verbunden. In der Schließstellung des Ventils bildet die Ventilnadel einerseits mit dem Ventilsitz und andererseits mit der Stellvorrichtung einen gehäusefesten starren Verbund. Nun ist aber die Ventilnadel eines Expansionsventils abhängig vom Kältemittelstrom starken Temperaturschwankungen ausgesetzt. Dies führt zu Wärmeausdehnungen, verbunden mit einer Überhöhung der gegen den Ventilsitz wirkenden Schließkraft. Dadurch kann sich die Ventilnadel mit dem Ventilsitz so verkeilen, daß sie mit dem Motor nicht mehr geöffnet werden kann.

Aus der EP-A-0 361 539 ist ein Expansionsventil der eingangs angegebenen Art bekannt. Dort ist zwischen einem motorisch axial verschiebbaren Hülsenteil und einem teleskopartig in dem Hülsenteil geführten Verschlußorgan eine Druckfeder angeordnet. Die axiale Endstellung des Hülsenteils wird durch den Formschluß eines an der Motorspindel angeordneten Radialzapfens mit einem gehäusefesten Anschlagzapfen unabhängig vom Drehmoment des Motors bestimmt, wobei die Druckfeder eine definierte Anpreßkraft des Verschlußorgans gegen den Ventilsitz in der Schließlage vorgibt. Hierbei wird jedoch der Stellhub des Hülsenteils aufgrund des zusätzlichen Federwegs nicht direkt auf das Verschlußorgan übertragen, womit wegen des zu überwindenden Tothubs die Ansprechzeit des Ventils vor allem in der Schließstellung verschlechtert wird.

Ausgehend hiervon liegt der Erfindung die Aufgabe zugrunde, ein Expansionsventil zu entwickeln, mit dem eine feinfühlige Steuerung des Kältemittelstroms ermöglicht und zugleich das Festsitzen von Verschlußorganen zuverlässig verhindert wird.

Zur Lösung dieser Aufgabe wird gemäß der Erfindung die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Die erfindungsgemäße Lösung beruht auf der Überlegung, die aus der Wärmeausdehnung der Verschlußorgane resultierenden Axialkräfte federelastisch zu kompensieren. Dadurch wird die Deformation des Ventilsitzes durch die Ventilnadel in der Schließstellung verringert und eine zuverlässige Funktion des Ventils auch bei längeren Unterbrechungen des Kältemittelstroms gewährleistet. Das federelastische Kraftübertragungsglied ist unter Vorspannung in einem Federkäfig eingeschlossen. Dadurch ist es möglich, daß die Stellbewegung bei verringertem Kompressionsweg des federelastischen Kraftübertragungsglieds ohne nennenswerten Tothub vom Stößel auf den Ventilkörper übertragen wird, wodurch eine vor allem in der Schließstellung kürzere Ansprechzeit des Expansionsventils erzielt wird. Erfindungsgemäß ist die von dem Federkäfig aufgenommene Vorspannkraft des Kraftübertragungsglieds größer als die vom Stellmotor auf den Stößel ausgeübte Stellkraft. Damit kann der Stellhub des Stößels unmittelbar auf den Ventilkörper übertragen werden. Dennoch kann das Kraftübertragungsglied die Wärmeausdehnung des Ventilkörpers ausgleichen.

Zur Aufnahme von in Verschieberichtung des Ventilkörpers wirksamen Wärmedehnungen ist das Kraftübertragungsglied vorteilhafterweise als Druckfeder, insbesondere als Schraubenfeder oder als Tellerfeder ausgebildet.

Zur Herstellung einer spielfreien Verbindung zwischen dem Stößel und dem Ventilkörper kann das Kraftübertragungsglied mit dem durch eine Eingriffsöffnung des Federkäfigs hindurchgreifenden Stößel und/oder Ventilkörper zweckmäßig über eine Druckscheibe kraftschlüssig verbunden sein.

Um ein sicheres Öffnen des Ventils zu gewährleisten und um einen kraftschlüssigen Verbund zwischen Ventilkörper und Stößel herzustellen, ist der Ventilkörper vorteilhafterweise entgegen der Kraft einer Rückstellfeder in den Schließzustand verschiebbar.

Des weiteren ist es vorteilhaft, wenn der Stellmotor in einem gasdicht abgedichteten, mit dem Ventilgehäuse verbundenen Motorgehäuse angeordnet ist und der Stößel einseitig und gasdicht in das Ventilgehäuse eingreift. Dadurch wird vermieden, daß in das Motorgehäuse oder das Ventilgehäuse Feuchtigkeit eindringen und dort eventuell gefrieren kann.

Die Erfindung wird nachstehend anhand eines in der Zeichnung in schematischer Weise dargestellten Ausführungsbeispiels näher erläutert. Es zeigen:
- Fig. 1: einen Längsschnitt durch ein (nicht beanspruchtes) Expansionsventil für Kältemittel;
- Fig. 2: eine vergrößerte Darstellung einer über einen Federkäfig hergestellten Verbindung zwischen dem Stößel und der Ventilnadel des Expansionsventils nach Fig. 1.

Das in der Zeichnung dargestellte Expansionsventil 10 besteht im wesentlichen aus einem zylindrischen Ventilgehäuse 12, einem als Ventilnadel 14 ausgebildeten, federelastisch mit einem Stößel 16 verbundenen Ventilkörper, und aus einem stirnseitig am Ventilgehäuse 12 angeordneten Motorgehäuse 18, in welchem ein vorzugsweise als Schrittmotor ausgebildeter Stellmotor 20 befestigt ist. Das Ventilgehäuse 12 weist eine Ventilkammer 22 auf, die über eine axiale Einlaßbohrung 24 mit einem Einlaßstutzen 26 sowie über eine radiale Auslaßbohrung 28 mit einem radial überstehenden, querschnittserweiterten Auslaßstutzen 30 kommuniziert.

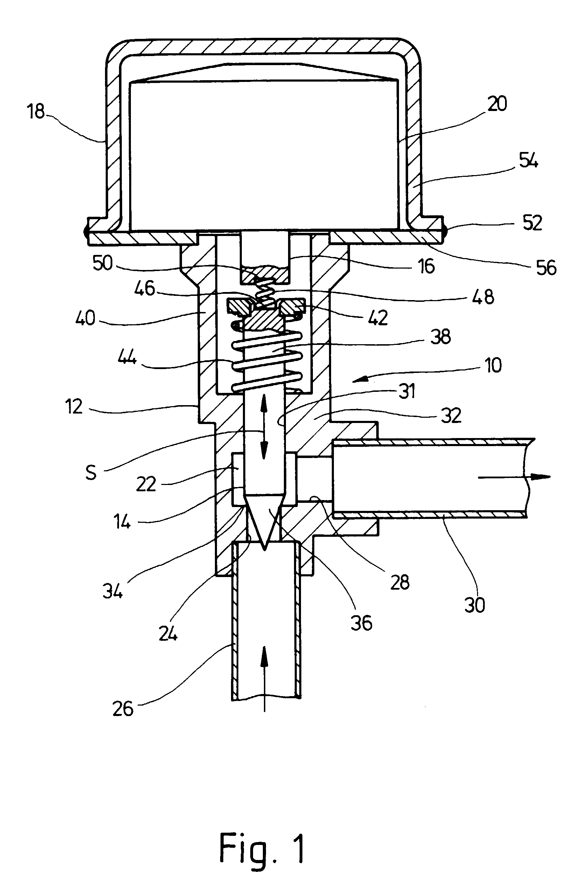

Die Ventilnadel 14 ist in einer an die Ventilkammer 22 anschließenden Axialbohrung 31 eines Gehäuseteils 32 verschiebbar geführt und besitzt eine gegen den Kältemittelstrom weisende kegelförmige Spitze 36. In der in Fig. 1 dargestellten Schließstellung durchsetzt die Spitze 36 die Einlaßbohrung 24 und verschließt dabei einen von der Einlaßbohrung 24 im Boden der Ventilkammer 22 gebildeten Ventilsitz 34.

Mit ihrem zylindrischen Schaft 38 ragt die Ventilnadel 14 in eine Endhülse 40 des Ventilgehäuses 12, wo sie endseitig von einer radial überstehenden Ringscheibe 42 begrenzt wird, die als Widerlager einer die Ventilnadel umgebenden, in der Schließstellung vorgespannten Rückstellfeder 44 dient.

Weiterhin weist das stirnseitige Ende der Ventilnadel 14 eine kurze axiale Sackbohrung 46 auf, welcher eine entsprechende stirnseitige Bohrung 50 des in axialem Abstand angeordneten, gleichachsig beweglichen Stößels 16 gegenüberliegt. In den Bohrungen (46,50) ist eine als Kraftübertragungsglied wirkende Schraubenfeder 48 mit ihren jeweiligen Endabschnitten eingepaßt.

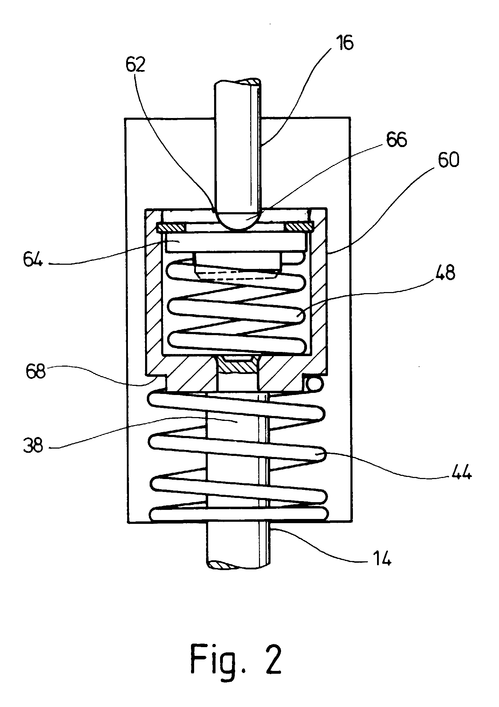

Wie in Fig. 2 dargestellt, ist die Schraubenfeder 48 zur Verringerung ihres für die Kraftübertragung erforderlichen Federhubes unter Vorspannung in einen als stirnseitig geschlossene Zylinderhülse 60 ausgebildeten Federkäfig eingeschlossen. Die an ihrer unteren Stirnseite starr mit dem Schaft 38 der Ventilnadel 14 verbundene Zylinderhülse 60 weist an ihrer oberen stößelseitigen Stirnseite eine zentrale Öffnung 62 auf, die von dem Stößel 16 durchgriffen wird, wobei dieser mit einem endseitigen Halbrundkopf 66 gegen eine auf die Schraubenfeder 48 aufgesteckte Druckscheibe 64 anstößt. Zur Herstellung einer kraftschlüssigen Verbindung zwischen der Druckscheibe 64 und dem Halbrundkopf 66 wird der Federkäfig 60 von der in die Eindrehung 68 eingreifenden Rückstellfeder 44 in Richtung des Stößels 16 gedrückt.

An seinem einen mittels Schweißnaht 52 gasdicht mit einem Deckel 54 des Motorgehäuses 18 verbundenen Boden 56 durchsetzenden Ende wird der Stößel 16 in axialer Richtung von dem gehäusefest angeordneten Stellmotor 20 angetrieben. In einer so einstellbaren Verstellage ist der Stößel 16 durch den selbsthemmenden motorischen Antrieb verschiebefest gesichert. Grundsätzlich ist es auch möglich, den Stellmotor 20 undrehbar, jedoch axial verschiebbar innerhalb des Motorgehäuses 18 zu lagern und den Stößel 16 starr mit dem Stellmotor 20 zu verbinden.

In einer Kälteanlage ist das Expansionsventil 10 eingangsseitig mit einem Kondensator und ausgangsseitig mit einem Verdampfer verbunden. Es dient als Stellglied zur Steuerung des zweckmäßig sollwertabhängig mittels eines Rechners gesteuerten Kältemittelkreislaufs. Das im Kondensator verflüssigte Kältemittel wird im Expansionsventil 10 auf den Druck des Verdampfers entspannt, wobei das Ventil in Abhängigkeit vom Kältemittelstrom Temperaturschwankungen unterworfen ist.

Zur Steuerung des Massenstroms durch das Ventil 10 ist der Stößel 16 mittels des Stellmotors 20 in axialer Verschieberichtung bewegbar. Abhängig vom Hub der entsprechend dem Doppelpfeil S verschiebbaren Ventilnadel 14 ist der Durchgangsquerschnitt des Ventilsitzes 34 kontinuierlich veränderbar und gegebenenfalls vollständig verschließbar. Die Kraftübertragung auf die Ventilnadel 14 erfolgt über die in dem Federkäfig 60 vorgespannte Schraubenfeder 48, deren Vorspannung bei einer beispielsweise auf 100 N ausgelegten Stellkraft zweckmäßig höher, beispielsweise auf 130 N eingestellt ist. Grundsätzlich ist es auch möglich, die Stellkraft des Stellmotors 20 über eine nicht vorgespannte Schraubenfeder 48 zu übertragen. In diesem Fall wird jedoch die Schraubenfeder in der Schließstellung um einen ihrer Federrate und der einzustellenden Schließkraft entsprechenden Teil ihrer Baulänge zusammengedrückt, so daß dann zum Öffnen des Ventils erst ein gewisser die Ansprechzeit verschlechternder Tothub zu überwinden ist. Da in Schließrichtung die Kraft der Rückstellfeder 44 zu überwinden ist, muß zur Vermeidung eines Formschlusses zwischen Stößel 16 und Ventilnadel 14 die Federkraft der Rückstellfeder 44 zweckmäßig kleiner als die Federkraft der Druckfeder 48 sein.

Mit der vorstehend beschriebenen Federanordnung kann der Stellhub des Stößels 16 ohne Verlängerung durch zusätzliche Federwege direkt auf die Ventilnadel 14 übertragen werden. Gleichzeitig wird insbesondere bei vollständig geschlossenem Ventil eine temperaturabhängige Längenausdehnung des durch den Motor 20 festgehaltenen Stößels 16 und der gegen den Ventilsitz 34 gedrückten Ventilnadel 14 durch Kompression der Schraubenfeder 48 ausgeglichen, und dadurch die zusätzlich auf den Ventilsitz 34 übertragene Klemmkraft wesentlich verringert. Ein mittels des Motors 20 nicht mehr lösbares Verkeilen der Ventilnadel 14 im Ventilsitz 34 kann somit wirksam verhindert werden, und auch die Gebrauchsdauer des Ventils wird durch die Federkompensation der Wärmedehnung deutlich erhöht.

## Patentansprüche

1. Expansionsventil für Kältemittel in Kälteanlagen oder Wärmepumpen, mit einem innerhalb eines Ventilgehäuses (12) axial verschiebbar geführten, in einer Schließstellung einen Ventilsitz (34) druckdicht verschließenden Ventilkörper (14), einem zur Betätigung des Ventilkörpers (14) vorgesehenen, mittels eines vorzugsweise als Schrittmotor ausgebildeten Stellmotors (20) in Verschieberichtung (S) des Ventilkörpers (14) verstellbaren und dabei in seiner Verstellage verschiebefest sicherbaren Stößel (16), und einem zwischen dem Ventilkörper (14) und dem Stößel (16) angeordneten, die Wärmeausdehnung des Ventilkörpers und des Stößels kompensierenden federelastischen Kraftübertragungsglied, **gekennzeichnet** durch einen das Kraftübertragungsglied (48) unter Vorspannung einschließenden Federkäfig (60), wobei die Vorspannung des auf Druck beanspruchten Kraftübertragungsglieds (48) größer als die von dem Stellmotor (20) auf den Stößel (16) ausgeübte Stellkraft ist.

2. Expansionsventil nach Anspruch 1, **dadurch gekennzeichnet**, daß das Kraftübertragungsglied (48) als Druckfeder, insbesondere als Schraubenfeder oder als Tellerfeder ausgebildet ist.

3. Expansionsventil nach Anspruch 1 oder 2, **dadurch gekennzeichnet**, daß der das federelastische Kraftübertragungsglied (48) einschließende Federkäfig (60) zwischen dem Ventilkörper (14) und dem Stößel (16) angeordnet ist.

4. Expansionsventil nach Anspruch 3, **dadurch gekennzeichnet**, daß das Kraftübertragungsglied (48) mit dem durch eine Eingriffsöffnung (62) des Federkäfigs (60) hindurchgreifenden Stößel (16) und/oder Ventilkörper (14) zweckmäßig über eine Druckscheibe (64) kraftschlüssig verbunden ist.

5. Expansionsventil nach einem der Ansprüche 1 bis 4, **dadurch gekennzeichnet**, daß der Ventilkörper (14) entgegen der Kraft einer Rückstellfeder (44) in die Schließstellung verschiebbar ist.

6. Expansionsventil nach einem der Ansprüche 1 bis 5, **dadurch gekennzeichnet**, daß der Ventilkörper (14) als Ventilnadel ausgebildet ist.

7. Expansionsventil nach einem der Ansprüche 1 bis 6, **dadurch gekennzeichnet**, daß der Stellmotor (20) in einem gasdicht abgedichteten, mit dem Ventilgehäuse (12) verbundenen Motorgehäuse (18) angeordnet ist.

8. Expansionsventil nach einem der Ansprüche 1 bis 7, **dadurch gekennzeichnet**, daß der Stößel (16) einseitig und gasdicht in das Ventilgehäuse (12) eingreift.

9. Expansionsventil nach einem der Ansprüche 1 bis 8, **dadurch gekennzeichnet**, daß der Stellmotor (20) undrehbar, jedoch axial verschiebbar am Ventilgehäuse gelagert ist und daß der Stößel (16) unverschiebbar mit dem Stellmotor (20) verbunden ist.

10. Expansionsventil nach einem der Ansprüche 1 bis 8, **dadurch gekennzeichnet,** daß der zweckmäßig als Linearmotor ausgebildete Stellmotor (20) gehäusefest angeordnet ist.

## Claims

1. Expansion valve for refrigenrants in refrigerators or heat pumps, comprising a valve body (14) which is axially movably guided in a valve casing (12) and which closes-off a valve seat (34) in a fluid-tight manner in a closed position, a plunger (16) for actuating the valve body (14), which plunger is adjustable in the direction of movement (S) of the valve body (14) by means of a servomotor (20), preferably a stepper motor, and is therein lockable in its adjustment position in a non- displaceable manner, and a spring-elastic force transmitting member which is disposed between the valve body (14) and the plunger (16) and which compensates the thermal expansion of the valve body and the plunger, characterized by a biased spring cage (60) which encloses the force transmitting member (48), wherein the bias of the force transmitting member (48) which is acted upon by pressure is larger than the displacing force imparted to the plunger (16) by the servomotor (20).

2. Expansion valve according to claim 1, characterized in that the force transmitting member (48) is formed to be a compression spring, in particular a helical spring or a disc spring.

3. Expansion valve according to claim 1 or 2, characterized in that the spring cage (60) enclosing the spring-elastic force transmitting member is disposed between the valve body (14) and the plunger (16).

4. Expansion valve according to claim 3, characterized in that the force transmitting member (48) is frictionally connected to the plunger (16) which extends through an opening (62) of the spring cage (60) and/or to the valve body (14), preferably by means of a thrust plate (64).

5. Expansion valve according to one of claims 1 to 4, characterized in that the valve body (14) is displaceable into its closed position against the force of a return spring (44).

6. Expansion valve according to one of claims 1 to 5, characterized in that the valve body (14) is formed to be a valve needle.

7. Expansion valve according to one of claims 1 to 6, characterized in that the servomotor (20) is disposed within a motor casing (18) which is sealed in a gas-tight manner and connected to the valve casing (12).

8. Expansion valve according to one of claims 1 to 7, characterized in that the plunger (16) extends with one end into the valve casing (12) in a gas-tight manner.

9. Expansion valve according to one of claims 1 to 8, characterized in that the servomotor (20) is non-rotatably yet axially displaceably borne at the valve casing, and that the plunger is undisplaceably connected to the servomotor (20).

10. Expansion valve according to one of claims 1 to 8, characterized in that the servomotor (20), which is advantageously formed to be a linear motor, is rigidly connected to the casing.

## Revendications

1. Soupape de détente pour des réfrigérants dans des installations frigorifiques ou des pompes à chaleur, comprenant un corps de soupape (14) guidé de manière mobile dans le sens axial à l'intérieur d'une cage de soupape (12) et obturant de manière étanche un siège de soupape (34) dans une position de fermeture, un poussoir (16) prévu pour l'actionnement du corps de soupape (14) qui peut être déplacé dans la direction de déplacement (S) du corps de soupape (14) au moyen d'un moteur pas à pas réalisé de préférence sous la forme d'un servomoteur (20), et bloqué en translation dans sa position de réglage, un organe de transmission de force élastique disposé entre le corps de soupape (14) et le poussoir (16) et compensant la dilatation thermique du corps de soupape et du poussoir, **caractérisée en ce** qu'elle comprend une cage à ressort (60) enfermant l'organe de transmission de force (48) sous précontrainte, la précontrainte de l'organe de transmission de force (48) sollicité en compression étant plus grande que la force de réglage exercée par le servomoteur (20) sur le poussoir (16).

2. Soupape de détente selon la revendication 1, caractérisée en ce que l'organe de transmission de force (48) est réalisé sous la forme d'un ressort de pression, notamment d'un ressort cylindrique ou d'une rondelle-ressort.

3. Soupape de détente selon la revendication 1 ou 2, caractérisée en ce que la cage à ressort (60) enfermant l'organe de transmission de force (48) commandé par ressort est disposée entre le corps de soupape (14) et le poussoir (16).

4. Soupape de détente selon la revendication 3, caractérisée en ce que l'organe de transmission de force (48) est couplé par adhérence avec le poussoir (16) traversant une ouverture d'introduction (62) de la cage à ressort (60) et/ou du corps de soupape (14), de préférence par l'intermédiaire d'une rondelle de pression (64).

5. Soupape de détente selon l'une des revendications 1 à 4, caractérisée en ce que le corps de soupape (14) peut être déplacé, contre la force d'un ressort de rappel (44), dans la position de fermeture.

6. Soupape de détente selon l'une des revendications 1 à 5, caractérisée en ce que le corps de soupape (14) est réalisé sous la forme d'une aiguille de soupape.

7. Soupape de détente selon l'une des revendications 1 à 6, caractérisée en ce que le servomoteur (20) est disposé dans un carter-moteur (18) étanche aux gaz, couplé avec la cage de soupape (12).

8. Soupape de détente selon l'une des revendications 1 à 7, caractérisée en ce que le poussoir (16) s'engage unilatéralement et de manière étanche aux gaz dans la cage de soupape (12).

9. Soupape de détente selon l'une des revendications 1 à 8, caractérisée en ce que le servomoteur (20) est monté de manière rigide en rotation mais mobile dans le sens axial sur la cage de soupape, et que le poussoir (16) est solidarisé avec le servomoteur (20).

10. Soupape de détente selon l'une des revendications 1 à 8, caractérisée en ce que le servomoteur (20) réalisé de préférence sous la forme d'un moteur linéaire, est solidaire du carter.
